# EUROPEAN PATENT SPECIFICATION

(11) **EP 4 311 157 B1**
(45) Date of publication and mention of the grant of the patent: **18.12.2024**
(21) Application number: 22185737.8
(22) Date of filing: 19.07.2022
(51) Int. Cl.: H04L 9/00, G06F 21/64, G06Q 30/018, G06Q 30/06

(54) **METHOD FOR GENERATING AN NFT ASSOCIATED WITH A DIGITAL ASSET, METHOD FOR VERIFYING A SIMILARITY BETWEEN DIGITAL ASSETS, CORRESPONDING COMPUTER PROGRAM PRODUCTS AND DEVICES**
VERFAHREN ZUM ERZEUGEN EINER NFT, DIE MIT EINEM DIGITALEN GUT VERBUNDEN IST, VERFAHREN ZUM VERIFIZIEREN DER ÄHNLICHKEIT ZWISCHEN DIGITALEN GÜTERN, ENTSPRECHENDE COMPUTERPROGRAMMPRODUKTE UND VORRICHTUNGEN
PROCÉDÉ DE GÉNÉRATION D'UN NFT ASSOCIÉ À UN CONTENU NUMÉRIQUE, PROCÉDÉ POUR VÉRIFIER UNE SIMILARITÉ ENTRE ACTIFS NUMÉRIQUES, PRODUITS DE PROGRAMME INFORMATIQUE ET DISPOSITIFS CORRESPONDANTS

(43) Date of publication of application: 24.01.2024
(73) Proprietor: Nagravision Sarl, 1033 Cheseaux-sur-Lausanne (CH)
(72) Inventor: STRANSKY-HEILKRON, Philippe, 1033 CHESEAUX-SUR-LAUSANNE (CH)
(74) Representative: Ipside

(56) References cited:
- CN-A- 114 359 590
- CN-A- 114 756 627
- DIPANJAN DAS ET AL: "Understanding Security Issues in the NFT Ecosystem", ARXIV.ORG, CORNELL UNIVERSITY LIBRARY, 201 OLIN LIBRARY CORNELL UNIVERSITY ITHACA, NY 14853, 17 November 2021 (2021-11-17), XP091100239
- DOBRE ROBERT ALEXANDRU ET AL: "Blockchain-Based Image Copyright Protection System using JPEG Resistant Digital Signature", 2020 IEEE 26TH INTERNATIONAL SYMPOSIUM FOR DESIGN AND TECHNOLOGY IN ELECTRONIC PACKAGING (SIITME), vol. 26, 21 October 2020 (2020-10-21), pages 206 - 210, XP093009958, ISBN: 978-1-7281-7506-5, Retrieved from the Internet <URL:https://ieeexplore.ieee.org/stampPDF/getPDF.jsp?tp=&arnumber=9292296&ref=aHR0cHM6Ly9pZWVleHBsb3JlLmllZWUub3JnL2Fic3RyYWN0L2RvY3VtZW50LzkyOTIyOTY/Y2FzYV90b2tlbj10SGlWZlgxZUcyOEFBQUFBOjUxVWY0Q1RfODZnLUlKNVE0UTVpUjFkRy03M2lKa3I2VHRRNlRzUnBBaUhQeE9NMF9QNEFrUEFZRXVnLWdCcEF5LVlHTGh4RQ==> DOI: 10.1109/SIITME50350.2020.9292296

## Description

### 1. FIELD OF THE DISCLOSURE

The field of the disclosure is the authentication of digital assets or contents.

More specifically, the disclosure relates to a technology for verifying a similarity between digital assets.

The disclosure can be of interest in any field wherein digital assets represent values, depending e.g. on its uniqueness. This may be the case for instance, for digital images, videos, sound, etc.

### 2. TECHNOLOGICAL BACKGROUND

Patent documents CN114359590 A, CN114756627 A and publications Das, Dipanjan, et al. "Understanding security issues in the NFT ecosystem." Proceedings of the 2022 ACM SIGSAC Conference on Computer and Communications Security. 2022; and Dobre, Robert Alexandru, et al. "Blockchain-based image copyright protection system using JPEG resistant digital signature." 2020 IEEE 26th International Symposium for Design and Technology in Electronic Packaging (SIITME). IEEE, 2020 provide teachings relevant to the technical field of the invention.

A digital asset may be of considerable value, depending on its usage and/or its uniqueness. Examples of such digital assets are digital images, videos, sounds, and any digital asset that can be sensed with the appropriate rendering mechanism. Images and sounds are the most common digital assets that can be sensed by humans, but new technologies enable "rendering" of touch, smell and very soon, taste. Some digital assets can be considered a work of art, with high market value; other digital assets can represent an extension of a human body, like a weapon or a spaceship or a vehicle in an online game.

Digital assets can also be made of a digital object and possibly with metadata, for example for object-oriented media, where the sound of a flying bee is rendered from the combination of a digital representation of the sound of the bee and metadata describing the flying path of the bee.

The problem is that digital assets can be easily duplicated while keeping their integrity and pristine state. It is impossible to differentiate the original and the copy. This becomes a major problem when the value of these digital assets depends on their uniqueness. An issue is therefore to be able to demonstrate which digital assets is the original one, who is the original artist or creator, etc.

In this perspective, a person purchasing a digital asset typically receives a certificate comprising information describing e.g. the characteristics of the asset and date of purchase. The certificate often takes the form a non-fungible token, hereafter NFT. The NFT can be logged in a blockchain, creating an unmodifiable trace of the ownership of the NFT.

But there could be a problem if a second certificate is issued to another person, which certificate describes the characteristics of an exact digital copy, or a very similar version of the original asset. In theory, it is easy to verify the anteriority by verifying the dates in the blockchain. But it may be that the digital asset has been slightly modified in such a way that the original asset and slightly modified copy are not digitally equal, which means that it is possibly another valid NFT. In the case of an image, both the original and slightly modified copy can look very similar, which would probably create some disappointment to the owner of the original asset and NFT, as well as reduce the value of the asset: in his view, the image is not unique anymore.

There is thus a need for a method that allows the detection of possible copies (exact or slightly modified copies) of a digital asset.

### 3. SUMMARY

A particular aspect of the present disclosure relates to a method for generating an NFT associated with a digital asset. According to such method, an electronic device executes:
- obtaining an initial NFT comprising information identifying the digital asset;
- obtaining information, named transformation information, representative of at least one transformation method delivering a transformed digital asset when applied to the digital asset, the transformation method reducing the amount of information present in the digital asset for having the transformed digital asset representative of at least one technical characteristic of the digital asset; and
- updating the information of the initial NFT delivering the NFT associated with the digital asset, the updated information comprising the transformation information.

Thus, the present disclosure proposes a new and inventive solution for allowing the detection of possible copies (exact or slightly modified copies) of a digital asset. Such digital asset is e.g. of the kind that can be sensed by a human when rendered by an adapted rendering means. This may be the case for instance for a video, an image, a sound, a touch or a smell.

More particularly, the proposed solution relies on the use of transform methods that allows highlighting the main technical characteristics of the digital asset. Indeed, when slight modifications are performed on digital assets, their main technical characteristics remain unchanged. By removing the subtle variations in a digital asset, we can thus expect to be able to detect slightly modified copies.

In some embodiments, the updated information comprises the transformed digital asset.

In some embodiments, the transformation information comprises the transformation method itself or an identification of the transformation method.

In some embodiments, the electronic device executes obtaining information, named fingerprint information, representative of at least one fingerprint method delivering a fingerprint when applied to the transformed digital asset. The updated information comprises the fingerprinting information.

The fingerprint method is e.g. a hash function or a Rabin function.

In some embodiments, the fingerprint information comprises the fingerprint method itself or an identification of the fingerprint method.

In some embodiments, the updated information comprises the fingerprint.

In some embodiments, the obtaining an initial NFT comprises:
- generating the initial NFT; or
- retrieving the initial NFT from a blockchain.

Another aspect of the present disclosure relates to a method for verifying a similarity between digital assets. According to such method, an electronic device executes:
- obtaining a first NFT associated with a first digital asset and generated by execution of the method for generating an NFT according to any of the embodiments discussed above;
- obtaining a second NFT associated with a second digital asset; and
- verifying the similarity of the first digital asset with the second digital asset based on at least one comparison between, on one hand, first data based on an output of a transformation method applied to the first digital asset and, on the other hand, second data based on an output of the transformation method applied to the second digital asset, the transformation method being identified by the transformation information of the first NFT.

In some embodiments, the obtaining the first NFT comprises:
- generating the first NFT by execution of the method for generating an NFT according to any of the embodiments discussed above; or
- retrieving, from a blockchain, the first NFT generated by execution of the method for generating an NFT according to any of the embodiments discussed above.

In some embodiments, the obtaining the second NFT comprises:
- generating the second NFT by execution of the method for generating an NFT according to any of the embodiments discussed above; or
- retrieving, from a blockchain, the second NFT generated by execution of the method for generating an NFT according to any of the embodiments discussed above.

Thus, the second NFT can be an NFT with additional information according to the present disclosure or an NFT in the meaning of the state-of-the-art (e.g. metadata such as for identifying the digital asset and eventually for identifying a holder of the digital asset).

In some embodiments wherein the information of the first NFT comprises the transformed first digital asset, the verifying the similarity comprises reading the transformed first digital asset from the information in the first NFT. The first data is based on the read transformed first digital asset.

Thus, the computational load is reduced when performing the verifying of the similarity between the digital assets.

In alternative embodiments wherein the information of the first NFT comprises the transformed first digital asset, the verifying the similarity comprises applying the transformation method to the first digital asset delivering a transformed first digital asset. The first data is based on the delivered transformed first digital asset.

Thus, the result of the verification of the similarity between the digital assets can be trusted even in case the transformed first digital asset, when present in the first NFT, has been modified in the first NFT, e.g. by a malicious person.

In some embodiments wherein the information of the first NFT comprises the fingerprinting information, the first data is based on a first fingerprint delivered by a fingerprint method applied to the output of the transformation method applied to the first digital asset. The second data is based on a second fingerprint delivered by the fingerprint method applied to the output of the transformation method applied to the second digital asset. The fingerprint method is identified by the fingerprint information of the first NFT.

Thus, the comparison is straightforward when relying on the first and second fingerprints, thus reducing again the computational load when performing the verifying of the similarity between the digital assets.

In some embodiments wherein the information of the first NFT comprises a first fingerprint associated with the first digital asset, the verifying the similarity comprises reading the first fingerprint from the information in the first NFT. The first data is based on the read first fingerprint.

In alternative embodiments wherein the information of the first NFT comprises a first fingerprint associated with the first digital asset, the verifying the similarity comprises applying the fingerprint method to the first digital asset delivering the first fingerprint. The first data is based on the delivered first fingerprint.

Thus, the verification of the similarity between the digital assets can be performed even in case the fingerprint of the first digital asset, when present in the first NFT, has been modified in the first NFT, e.g. by a malicious person.

Another aspect of the present disclosure relates to a computer program product comprising program code instructions for implementing the above-mentioned method for generating an NFT (in any of the different embodiments discussed above), when said program is executed on a computer or a processor.

Another aspect of the present disclosure relates to a computer program product comprising program code instructions for implementing the above-mentioned method for verifying a similarity between digital assets (in any of the different embodiments discussed above), when said program is executed on a computer or a processor.

Another aspect of the present disclosure relates to an electronic device configured for implementing all or part of the steps of the above-mentioned method for generating an NFT (in any of the different embodiments discussed above). Thus, the features and advantages of this device are the same as those of the corresponding steps of said method. Therefore, they are not detailed any further.

Another aspect of the present disclosure relates to an electronic device configured for implementing all or part of the steps of the above-mentioned method for verifying a similarity between digital assets (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a terminal equipment communicatively connected to a server of an NFT management service provider according to one embodiment of the present disclosure;
- Figure 2 illustrates an example of the structural blocks of an electronic device allowing all or part of the steps of the method for generating an NFT of Figure 4 to be executed by the server of Figure 1 according to one embodiment of the present disclosure;
- Figure 3 illustrates an example of the structural blocks of an electronic device allowing all or part of the steps of the method for verifying a similarity between digital assets of Figure 5 to be executed by the server of Figure 1 according to one embodiment of the present disclosure;
- Figure 4 illustrates the steps of a method for generating an NFT according to one embodiment of the present disclosure;
- Figure 5 illustrates the steps of a method for verifying a similarity between digital assets according to one embodiment of the present disclosure;
- Figure 6a illustrates the rendering of a first digital picture;
- Figure 6b illustrates the rendering of the output of a transformation method applied to the first digital picture of Figure 6a according to one embodiment of the present disclosure;
- Figure 7a illustrates the rendering of a second digital picture;
- Figure 7b illustrates the rendering of the output of the transformation method applied to the second digital picture of Figure 7a according to one embodiment of the present disclosure.

### 5. DETAILED DESCRIPTION

In all of the Figures of the present document, the same numerical reference signs designate similar elements and steps.

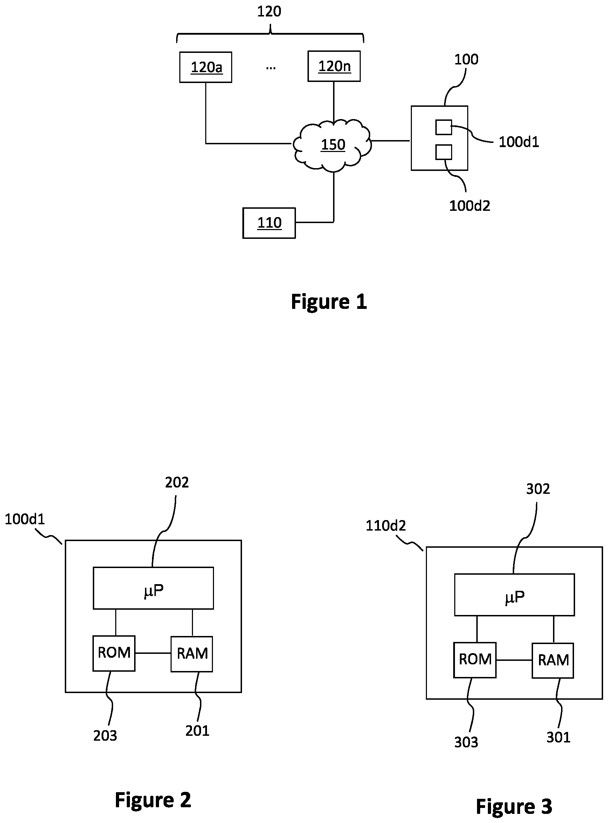

Referring now to **Figure 1****,** we describe a terminal equipment 110 communicatively connected to a server 100 of an NFT management service provider according to one embodiment of the present disclosure.

More particularly, the terminal equipment 110 (e.g. a smartphone, a tablet or a personal computer equipped with a wireless communications module, etc.) is communicatively connected to the server 100 through a wired communications link that goes through a core network 150. Such wired communications link is e.g. an xDSL communications link and implements e.g. an internet protocol.

However, in some embodiments, the communications link between the terminal equipment 110 and the server 100 goes through a wireless communications link, e.g. based on a cellular protocol (e.g. a 3GPP 2G, 3G, 4G or 5G protocol) or on a WiMAX protocol.

In Figure 1, the server 100 is communicatively connected to a plurality of servers 120a, ..., 120n that implement a blockchain 120. More particularly, the blockchain 120 registers NFT associated with digital assets (e.g. digital images, videos, sounds, touch, smell and any digital asset that can be sensed by a human with the appropriate rendering mechanism). All or part of the NFT registered in the blockchain 120 can be managed by the server 100 of the NFT management service provider.

In the present embodiment, the communications link between the server 100 and the plurality of servers 120a, ..., 120n goes through the core network 150. However, in other embodiments, the communications link between the server 100 and the plurality of servers 120a, ..., 120n goes through another communications network (e.g. a wired or a wireless communications network).

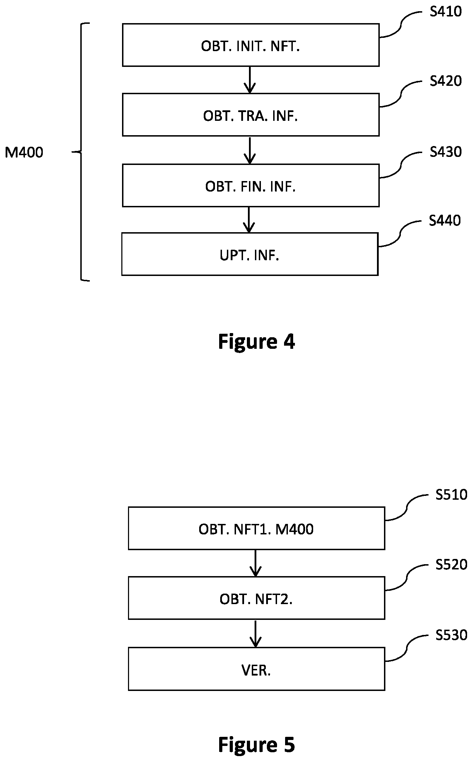

Back to Figure 1, the server 100 implements a first electronic device 100d1 that comprises means allowing all or part of the steps of the method for generating an NFT of Figure 4 to be executed. In the same way, the server 100 implements a second electronic device 100d2 that comprises means allowing all or part of the steps of the method for verifying a similarity between digital assets of Figure 5 to be executed.

More particularly, referring to **Figure 2****,** in order to implement all or part of the steps of the method for generating an NFT in the various embodiments disclosed below in relationship with Figure 4, in some embodiments the first electronic device 100d1 comprises:
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for generating an NFT) in the various embodiments disclosed in relationship with Figure 4.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for generating an NFT may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring to **Figure** 3, in order to be able to implement all or part of the steps of the method for verifying a similarity between digital assets in the various embodiments disclosed in relationship with Figure 5, in some embodiments the second electronic device 100d2 comprises:
- a non-volatile memory 303 (e.g. a read-only memory (ROM), a hard disk, a flash memory, etc.);
- a volatile memory 301 (e.g. a random-access memory or RAM) and a processor 202.

The non-volatile memory 303 is a non-transitory computer-readable carrier medium. It stores executable program code instructions, which are executed by the processor 302 in order to enable implementation of some steps of the method described below (method for verifying a similarity between digital assets) in the various embodiments disclosed in relationship with Figure 5.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for generating an NFT may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Back to Figure 1, the first electronic device 100d1 and the second electronic device 100d2 are implemented in the server 100. However, in other embodiments, the first electronic device 100d1 and/or the second electronic device 100d2 are implemented in another entity than the server 100, e.g. in one of the servers 120a, ..., 120n implementing the blockchain 120. In some embodiments, the first electronic device 100d1 and the second electronic device 100d2 are a same electronic device.

Referring now to **Figure 4****,** we describe a method M400 for generating an NFT according to one embodiment of the present disclosure.

More particularly, in a **step S410,** the first electronic device 110d1 obtains an initial NFT. Such initial NFT comprises information identifying a digital asset. Depending on the considered implementations, such NFT may comprise additional information as can be found in NFT according to the state of the art, e.g. metadata identifying a holder of the digital asset.

In some embodiments, the step S410 comprises the generation of the initial NFT. In such embodiments, the first electronic device 110d1 generates the initial NFT that comprises the information identifying the digital asset by execution e.g. of a known technique. Such first NFT, when generated, may be registered by the first electronic device 110d1 into the blockchain 120.

In some embodiments, the step S410 comprises retrieving the initial NFT from a blockchain 120. In such embodiments, the initial NFT already exists in the blockchain 120. The first electronic device 110d1 retrieves the initial NFT e.g. through a request sent to a server 120a, ..., 120n implementing the blockchain 120.

Back to Figure 4, in a **step S420,** the first electronic device 110d1 obtains information, named transformation information, representative of at least one transformation method that delivers a transformed digital asset when applied to the digital asset.

Depending on the embodiments, the transformation information comprises the transformation method itself or an identification of the transformation method.

More particularly, such transformation method reduces the amount of information present in the digital asset for having the transformed digital asset representative of at least one technical characteristic of the digital asset.

For instance, for a digital asset such as an image, the transform methods can comprise e.g. a modification of the luminance, brilliance, exposure, or a reduction in the definition, in a number of pixels, or a sampling of a subset of the image, a transformation into grayscale, in black and white, or a modification of the surfaces in order to keep only the contours. In this later case, well known algorithms like "Edge detection" can be used. The result of such transformation is that only important discontinuities remain in the transformed asset. For example, slight modifications of colors will be removed. For a video, the transform methods can comprise e.g. a reduction in the number of images per second, or reduction of the resolution of images. For a sound, the transform methods can comprise e.g. changes in the sampling rate or sampling according to frequency bands. Such methods allow reducing the amount of information (e.g. the entropy) contained in a digital asset so that subtle differences are removed and only the main technical characteristics remain. When relevant, the amount of information removed can be tuned using e.g. a threshold or a removal level.

The use of such transform methods that allows highlighting the main technical characteristics of the digital asset allows detecting in a straightforward way possible copies (exact or slightly modified copies) of the digital asset. Indeed, when slight modifications are performed on digital assets, the main technical characteristics of said assets remain unchanged. By removing the subtle variations in a digital asset, we can thus expect to be able to detect slightly modified copies. This behavior is discussed more deeply below in relation with the method for verifying a similarity between digital assets of Figure 5.

Back to Figure 4, in a step **S430,** the first electronic device 110d1 obtains another information, named fingerprint information, representative of at least one fingerprint method delivering a fingerprint when applied to the transformed digital asset.

Depending on the embodiments, the fingerprint information comprises the fingerprint method itself or an identification of the fingerprint method.

For instance, the fingerprint method implements e.g. a hash function or a Rabin function.

The use of such fingerprint methods allows a straightforward comparison between fingerprints obtained for different digital assets. However, applying a fingerprint method to the digital asset itself would be useless as a single bit of data that differs between two digital assets would result in different fingerprints. In order to detect slightly modified digital assets, the fingerprint methods are preferably applied to the transformed digital asset. Indeed, as discussed above, the considered transform methods reduce the amount of information (e.g. the entropy) contained in a digital asset so that subtle differences are removed and only the main technical characteristics remain. It can thus be expected that transformed digital assets obtained from slightly modified assets may be the same and so do the fingerprints obtained from the transformed digital assets. A similarity between digital assets may thus rely on a comparison of the fingerprints obtained from the corresponding transformed digital assets.

However, in some embodiments, the step S430 is not implemented and no fingerprint information is obtained by the first electronic device 110d1.

Back to Figure 4, in a step **S440,** the first electronic device 110d1 updates the information of the initial NFT delivering an updated NFT associated with the digital asset. More particularly, the updated information comprises the transformation information and the fingerprinting information.

In some embodiments, the updated information comprises the transformed digital asset.

In some embodiments, the updated information comprises the fingerprint of the transformed digital asset.

However, in the embodiments discussed above wherein the step S430 is not implemented, the updated information does not comprise the fingerprinting information and thus, in relevant corresponding embodiments, the updated information does not comprise the fingerprint of the transformed digital asset.

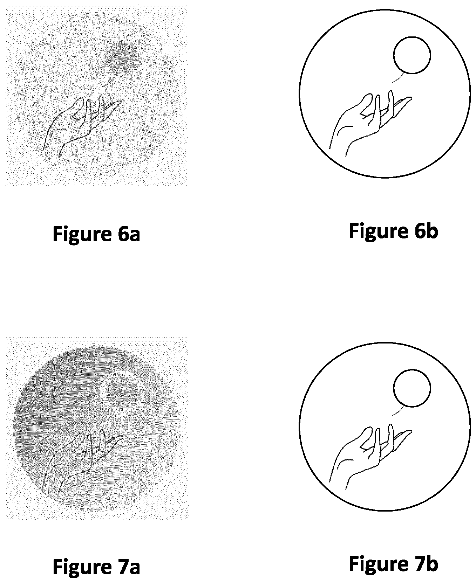

Referring now to **Figure 5****,** we describe a method for verifying a similarity between digital assets according to one embodiment of the present disclosure. Some of the steps of such method are further detailed based on the illustrative examples provided in **Figures 6a, 6b, 7a and 7b****.**

More particularly, in a **step S510,** the second electronic device 110d2 obtains a first NFT associated with a first digital asset. More particularly, the first NFT has been generated by execution of the method for generating an NFT as discussed above (in any of the embodiments discussed in relation with Figure 4).

In some embodiments, the step S510 comprises the generation of the first NFT by execution of the method for generating an NFT as discussed above (in any of the embodiments discussed in relation with Figure 4). In such embodiments, the second electronic device 110d2 thus implements the method for generating an NFT as discussed above (in any of the embodiments discussed in relation with Figure 4). The first NFT, when generated may be stored by the second electronic device 110d2 into the blockchain 120.

In some embodiments, the step S510 comprises retrieving the first NFT from a blockchain 120. In such embodiments, the first NFT already exists in the blockchain 120 and the second electronic device 110d2 retrieves the first NFT e.g. through a request sent to a server 120a, ..., 120n implementing the blockchain 120. However, even in such embodiments, the first NFT has been generated by the execution, e.g. by the first electronic device 110d1, of the method for generating an NFT as discussed above (in any of the embodiments discussed in relation with Figure 4).

Back to Figure 5, in a **step S520,** the second electronic device 110d2 obtains a second NFT associated with a second digital asset.

In some embodiments, the step S520 comprises the generation of the second NFT by execution of the method for generating an NFT as discussed above (in any of the embodiments discussed in relation with Figure 4). In such embodiments also, the second electronic device 110d2 thus implements the method for generating an NFT as discussed above (in any of the embodiments discussed in relation with Figure 4). The second NFT, when generated may be stored by the second electronic device 110d2 into the blockchain 120.

In some embodiments, the step S520 comprises retrieving the second NFT from a blockchain 120. In such embodiments, the second NFT already exists in the blockchain 120 and the second electronic device 110d2 retrieves the second NFT e.g. through a request sent to a server 120a, ..., 120n implementing the blockchain 120.

Thus, the second NFT can be an NFT with additional information according to the present disclosure or an NFT in the meaning of the state-of-the-art (e.g. metadata such as for identifying the digital asset and eventually a holder of the digital asset). This is different from the first NFT that is an NFT with updated information, as do NFTs generated by execution of the method for generating an NFT as discussed above (in any of the embodiments discussed in relation with Figure 4). For instance, the second NFT may be associated with a given digital asset a user of the terminal equipment 110 wants to buy through the services offered by the NFT management service provider. In that respect, the terminal equipment 110 may exchange data (e.g. in the form of requests/responses data frame exchanges through the core network 150) with the server 100. Responsive to receiving a request for buying the given digital asset, the second electronic device 110d2 in the server 100 may parse and search for NFTs in the blockchain 120 in the perspective of checking the similarity of the given digital asset with other digital assets of the same type. In that respect, the second electronic device 110d2 may obtain the first NFT associated with a first digital asset as discussed above.

Back to Figure 5, in a **step S530,** the second electronic device 110d2 verifies the similarity of the first digital asset with the second digital asset based on at least one comparison between, on one hand, first data based on an output of a transformation method applied to the first digital asset and, on the other hand, second data based on an output of the transformation method applied to the second digital asset. The transformation method is identified by the transformation information of the first NFT.

In some embodiments, all or part of the parameters of the transformation method identified by the transformation information of the first NFT are tuned before application to the second digital asset. This may be useful e.g. when it is suspected that slight modifications of a given kind differentiate the first digital asset and the second digital asset. The tuning of some parameters of the transformation method identified by the transformation information of the first NFT may allow retrieving more efficiently the technical characteristics of the second digital asset despite the slight modifications. Such tuning may be e.g. a change in a sampling rate when the digital asset is a sound, or a change in a threshold for deciding the contours of surfaces in an image, etc.

In some embodiments, a metric is estimated based on the first and second data (e.g. the norm of the difference of the first and second data). The first digital asset is declared as similar to the second digital asset when the metric is lower than a predetermined threshold. In this case, it can be suspected that the first digital asset is a slightly modified copy of the second digital asset and an alert may be raised by the second electronic device 110d2. The second electronic device 110d2 may thus send an alert information to the terminal equipment 110.

For instance, a first digital sound and a second digital sound can be compared by computing the sum of the numerical representation of the first digital sound with the opposite of the numerical representation of the second digital sound (or equivalently by computing the difference between the numerical representation of the first digital sound and the numerical representation of the second digital sound). Two identical digital sounds will result in silence (i.e. the numerical representation of the resulting sum (or difference) is zero, whether in the time domain or in the frequency domain). The same transformation method applied to two almost identical digital sounds will result in almost silence. In this case, further processing will allow determining the similarity of the digital sounds, for example by computing a metric based on the number of occurrences where the time domain numerical representation of the sum of the first digital sound with the opposite of the second digital sound (or the time domain numerical representation of the difference between the first digital sound and the second digital sound) is higher than a predetermined threshold. In order to save processing time, the sampling rate of the digital sounds can be reduced, for example from 48 kHz to 12 kHz. A similar approach consists in increasing the sampling intervals. Reducing the sampling rate will also remove differences that are not significant. The same method as described above is applied on both sounds with lower sampling rates. Other additional transformations can be applied, for exampling by capping the values of samples above a certain threshold.

According to another example, for comparing a first digital picture and a second digital picture, the transformation method can be based on an algorithm like "Edge detection" as discussed above in relation with Figure 4. However, in the case where the first digital picture and the second digital picture are of different size, the transformation can be "Edge detection", followed by computing the density of various pixels over a certain area of the pictures. The norm of the difference of the first and second densities can be used as a metric for declaring as similar the first digital picture and the second digital picture.

This behavior is for instance illustrated through the examples provided in Figures 6a, 6b, 7a and 7b. More particularly, Figure 6a illustrates the rendering of a first digital picture and Figure 7a illustrates the rendering of a second digital picture which is a slightly modified copy of the first digital picture. For instance, contrast and saturation has been changed in the second digital picture compared to that of the first digital picture. However, applying a transformation that corresponds to a modification of the surfaces in order to keep only the contours to the first and second digital pictures (e.g. a "Edge detection" transformation) delivers respectively the first transformed picture of Figure 6b and the second transformed picture of Figure 7b. A direct comparison of the first transformed picture and of the second transformed picture (e.g. through a difference between the characteristics (e.g. the color) of corresponding pixels in the first and second transformed picture and a comparison with a predetermined threshold) shows that the first and second transformed pictures are identical. It can thus be suspected that the first and second digital pictures are similar or, in other words, that the second digital picture is a slight modification of the first digital picture.

In some embodiments wherein the information of the first NFT comprises the transformed first digital asset, the step S530 comprises reading the transformed first digital asset from the information in the first NFT. The first data is based on the read transformed first digital asset.

Thus, the computational load is reduced when performing the verifying of the similarity between the digital assets.

However, in alternative embodiments wherein the information of the first NFT comprises the transformed first digital asset, the step S530 comprises applying the transformation method to the first digital asset delivering a transformed first digital asset. The first data is based on the delivered transformed first digital asset.

Thus, the result of the verification of the similarity between the first and second digital assets can be trusted even in case the transformed first digital asset, when present in the first NFT, has been modified in the first NFT, e.g. by a malicious person.

In some embodiments wherein the information of the first NFT comprises the fingerprinting information, the first data is based on a first fingerprint delivered by a fingerprint method applied to the output of the transformation method applied to the first digital asset. The second data is based on a second fingerprint delivered by the fingerprint method applied to the output of the transformation method applied to the second digital asset. The fingerprint method is identified by the fingerprint information of the first NFT.

Thus, the comparison is straightforward when relying on the first and second fingerprints, thus reducing again the computational load when performing the verifying of the similarity between the digital assets.

In some embodiments wherein the information of the first NFT comprises a first fingerprint associated with the first digital asset, the step S530 comprises reading the first fingerprint from the information in the first NFT. The first data is based on the read first fingerprint.

Thus, the computational load is reduced when performing the verifying of the similarity between the digital assets.

However, in alternative embodiments wherein the information of the first NFT comprises the first fingerprint associated with the first digital asset, the step S530 comprises applying the fingerprint method to the first digital asset delivering the first fingerprint. The first data is based on the delivered first fingerprint.

Thus, the verification of the similarity between the digital assets can be performed even in case the fingerprint of the first digital asset, when present in the first NFT, has been modified in the first NFT, e.g. by a malicious person.

In some embodiments, the first data is based both on an output of a transformation method applied to the first digital asset (according to any of the embodiments discussed above) and on a first fingerprint delivered by a fingerprint method applied to the output of the transformation method applied to the first digital asset (according to any of the embodiments discussed above). The second data is based both on an output of the transformation method applied to the second digital asset (according to any of the embodiments discussed above) and on a second fingerprint delivered by the fingerprint method applied to the output of the transformation method applied to the second digital asset (according to any of the embodiments discussed above). The transformation method and the fingerprint method are identified respectively by the transformation information and by the fingerprint information of the first NFT.

## Claims

1. Method (M400) for generating a non-fungible token, hereafter NFT, associated with a digital asset, wherein an electronic device (100d1) executes:
- **obtaining** (S410) an initial NFT comprising information identifying the digital asset;
- **obtaining** (S420) information, named transformation information, representative of at least one transformation method delivering a transformed digital asset when applied to the digital asset, the transformation method reducing the amount of information present in the digital asset for having the transformed digital asset representative of at least one technical characteristic of the digital asset; and
- **updating** (S440) the information of the initial NFT delivering said NFT associated with the digital asset, the updated information comprising the transformation information.

2. Method for generating according to claim 1, wherein said updated information comprises the transformed digital asset.

3. Method for generating according to claim 1 or 2, wherein the electronic device executes:
- **obtaining** (S430) information, named fingerprint information, representative of at least one fingerprint method delivering a fingerprint when applied to the transformed digital asset,
said updated information comprising the fingerprinting information.

4. Method for generating according to claim 3, wherein said updated information comprises the fingerprint.

5. Method for generating according to any of the claims 1 to 4, wherein the **obtaining** an initial NFT comprises:
- **generating** the initial NFT; or
- **retrieving** the initial NFT from a blockchain.

6. Method for verifying a similarity between digital assets, wherein an electronic device (100d2) executes:
- **obtaining** (S510) a first non-fungible token, hereafter NFT, associated with a first digital asset and generated by execution of the method for generating an NFT according to any of the claims 1 to 5;
- **obtaining** (S520) a second NFT associated with a second digital asset; and
- **verifying** (S530) the similarity of the first digital asset with the second digital asset based on at least one comparison between, on one hand, first data based on an output of a transformation method applied to the first digital asset and, on the other hand, second data based on an output of the transformation method applied to the second digital asset, the transformation method being identified by the transformation information of the first NFT.

7. Method for verifying according to claim 6, wherein the **obtaining** the second NFT comprises:
- **generating** the second NFT by execution of the method for generating an NFT according to any of the claims 1 to 5; or
- **retrieving,** from a blockchain, the second NFT generated by execution of the method for generating an NFT according to any of the claims 1 to 5.

8. Method for verifying according to claim 6 or 7, the first NFT being generated by execution of the method for generating an NFT according to claim 2 or according to any of the claims 3 to 5 in that it depends on claim 2, wherein the **verifying** the similarity comprises **reading** the transformed first digital asset from the information in the first NFT, the first data being based on the read transformed first digital asset.

9. Method for verifying according to claim 6 or 7, the first NFT being generated by execution of the method for generating an NFT according to claim 2 or according to any of the claims 3 to 5 in that it depends on claim 2, wherein the **verifying** the similarity comprises **applying** the transformation method to the first digital asset delivering a transformed first digital asset, the first data being based on the delivered transformed first digital asset.

10. Method for verifying according to any of the claims 6 to 9, the first NFT being generated by execution of the method for generating an NFT according to claim 3 or according to any of the claims 4 to 5 in that it depends on claim 3, wherein the first data is based on a first fingerprint delivered by a fingerprint method applied to the output of the transformation method applied to the first digital asset,
wherein the second data is based on a second fingerprint delivered by the fingerprint method applied to the output of the transformation method applied to the second digital asset,
the fingerprint method being identified by the fingerprint information of the first NFT.

11. Method for verifying according to claim 10, the first NFT being generated by execution of the method for generating an NFT according to claim 4 or according to claim 5 in that it depends on claim 4, wherein the **verifying** the similarity comprises **reading** the first fingerprint from the information in the first NFT, the first data being based on the read first fingerprint.

12. Method for verifying according to claim 6 or 7, the first NFT being generated by execution of the method for generating an NFT according to claim 4 or according to claim 5 in that it depends on claim 4, wherein the **verifying** the similarity comprises **applying** the fingerprint method to the first digital asset delivering the first fingerprint, the first data being based on the delivered first fingerprint.

13. Computer program product comprising program code instructions which, when the program is executed by a computer, cause the computer to carry out the steps of the method according to any of the claims 1-12.

14. Electronic device (100d1) for generating a non-fungible token, hereafter NFT, associated with a digital asset,
wherein said electronic device comprises a processor (202) or a dedicated computing machine configured for:
- **obtaining** (S410) an initial NFT comprising information identifying the digital asset;
- **obtaining** (S420) information, named transformation information, representative of at least one transformation method delivering a transformed digital asset when applied to the digital asset, the transformation method reducing the amount of information present in the digital asset for having the transformed digital asset representative of at least one technical characteristic of the digital asset;
- **updating** (S440) the information of the initial NFT delivering said NFT associated with the digital asset, the updated information comprising the transformation information.

15. Electronic device (100d2) for verifying a similarity between digital assets,
wherein said electronic device comprises a processor (302) or a dedicated computing machine configured for:
- **obtaining** (S510) a first non-fungible token, hereafter NFT, associated with a first digital asset and generated by execution of the method for generating an NFT according to any of the claims 1 to 5;
- **obtaining** (S520) a second NFT associated with a second digital asset;
- **verifying** (S530) the similarity of the first digital asset with the second digital asset based on at least one comparison between, on one hand, first data based on an output of a transformation method applied to the first digital asset and, on the other hand, second data based on an output of the transformation method applied to the second digital asset, the transformation method being identified by the transformation information of the first NFT.

## Patentansprüche

1. Verfahren (M400) zur Erzeugung eines einem digitalen Asset zugeordneten nicht-fungiblen Tokens, im Folgenden NFT,
wobei eine elektronische Vorrichtung (100d1) Folgendes ausführt:
- Einleiten (S410) einer anfänglichen NFT, umfassend Informationen zur Identifizierung des digitalen Assets;
- Erhalten (S420) von Informationen, die Transformationsinformationen genannt werden, die für mindestens ein Transformationsverfahren repräsentativ sind, das ein transformiertes digitales Asset liefert, wenn es auf das digitale Asset angewandt wird, wobei das Transformationsverfahren die in dem digitalen Asset vorhandene Informationsmenge reduziert, damit das transformierte digitale Asset mindestens eine technische Eigenschaft des digitalen Assets aufweist; und
- Aktualisieren (S440) der Informationen der ursprünglichen NFT, die die dem digitalen Asset zugeordnete NFT liefert, wobei die aktualisierten Informationen die Transformationsinformationen umfassen.

2. Verfahren zur Erzeugung nach Anspruch 1, wobei die aktualisierte Informationen das transformierte digitale Asset umfassen.

3. Verfahren zur Erzeugung nach Anspruch 1 oder 2, wobei die elektronische Vorrichtung Folgendes ausführt:
- Erhalten (S430) von Informationen, die als Fingerabdruckinformationen bezeichnet werden und für mindestens ein Fingerabdruckverfahren repräsentativ sind, das einen Fingerabdruck liefert, wenn es auf das transformierte digitale Asset angewendet wird,
die aktualisierten Informationen die Fingerabdruckinformationen umfassen.

4. Verfahren zur Erzeugung nach Anspruch 3, wobei die aktualisierten Informationen den Fingerabdruck umfassen.

5. Verfahren zur Erzeugung nach einem der Ansprüche 1 bis 4, wobei das Erhalten einer anfänglichen NFT Folgendes umfasst:
- Erstellen der ursprünglichen NFT; oder
- Abrufen der ursprünglichen NFT aus einer Blockchain.

6. Verfahren zur Überprüfung einer Ähnlichkeit zwischen digitalen Assets,
wobei eine elektronische Vorrichtung (100d2) Folgendes ausführt:
- Erhalten (S510) eines ersten nicht-fungiblen Tokens, im Folgenden NFT, der einem ersten digitalen Asset zugeordnet ist und durch Ausführung des Verfahrens zur Erzeugung eines NFT nach einem der Ansprüche 1 bis 5 erzeugt wurde;
- Erhalten (S520) eines zweiten NFT, die einem zweiten digitalen Asset zugeordnet ist; und
- Überprüfen (S530) der Ähnlichkeit des ersten digitalen Assets mit dem zweiten digitalen Asset basierend auf mindestens einem Vergleich zwischen einerseits ersten Daten basierend auf einer Ausgabe eines auf das erste digitale Asset angewendeten Transformationsverfahrens und andererseits zweiten Daten basierend auf einer Ausgabe des auf das zweite digitale Asset angewendeten Transformationsverfahrens, wobei das Transformationsverfahren durch die Transformationsinformationen des ersten NFT identifiziert wird.

7. Verfahren zur Verifizierung nach Anspruch 6, wobei das Erhalten des zweiten NFT Folgendes umfasst:
- Erzeugen des zweiten NFT durch Ausführen des Verfahrens zur Erzeugung eines NFT nach einem der Ansprüche 1 bis 5; oder
- Abrufen des zweiten NFT, das durch Ausführung des Verfahrens zur Erzeugung eines NFT nach einem der Ansprüche 1 bis 5 erzeugt wurde, aus einer Blockchain.

8. Verfahren zur Überprüfung nach Anspruch 6 oder 7, wobei das erste NFT durch Ausführung des Verfahrens zur Erzeugung eines NFT nach Anspruch 2 oder nach einem der Ansprüche 3 bis 5 erzeugt wird, indem es von Anspruch 2 abhängt, wobei die Überprüfung der Ähnlichkeit das Lesen des transformierten ersten digitalen Assets aus den Informationen im ersten NFT umfasst, wobei die ersten Daten auf dem gelesenen transformierten ersten digitalen Asset basieren.

9. Verfahren zur Überprüfung nach Anspruch 6 oder 7, wobei der erste NFT durch Ausführung des Verfahrens zur Erzeugung eines NFT nach Anspruch 2 oder nach einem der Ansprüche 3 bis 5 erzeugt wird, indem er von Anspruch 2 abhängt, wobei die Überprüfung der Ähnlichkeit die Anwendung des Transformationsverfahrens auf den ersten digitalen Asset umfasst, der einen transformierten ersten digitalen Asset liefert, wobei die ersten Daten auf dem gelieferten transformierten ersten digitalen Asset basieren.

10. Verfahren zur Überprüfung nach einem der Ansprüche 6 bis 9, wobei das erste NFT durch Ausführung des Verfahrens zur Erzeugung eines NFT nach Anspruch 3 oder nach einem der Ansprüche 4 bis 5 erzeugt wird, indem es von Anspruch 3 abhängt, wobei die ersten Daten auf einem ersten Fingerabdruck basieren, der durch ein Fingerabdruckverfahren geliefert wird, das auf die Ausgabe des Transformationsverfahrens angewendet wird, das auf das erste digitale Asset angewendet wird,
wobei die zweiten Daten auf einem zweiten Fingerabdruck basieren, der von dem auf die Ausgabe des auf das zweite digitale Asset angewendeten Transformationsverfahrens angewendeten Fingerabdruckverfahren geliefert wird,
das Fingerabdruckverfahren durch die Fingerabdruckinformationen des ersten NFT identifiziert wird.

11. Verfahren zur Überprüfung nach Anspruch 10, wobei das erste NFT durch Ausführung des Verfahrens zur Erzeugung eines NFT nach Anspruch 4 oder nach Anspruch 5 erzeugt wird, indem es von Anspruch 4 abhängt, wobei die Überprüfung der Ähnlichkeit das Lesen des ersten Fingerabdrucks aus den Informationen im ersten NFT umfasst, wobei die ersten Daten auf dem gelesenen ersten Fingerabdruck basieren.

12. Verfahren zur Überprüfung nach Anspruch 6 oder 7, wobei das erste NFT durch Ausführung des Verfahrens zur Erzeugung eines NFT nach Anspruch 4 oder nach Anspruch 5 erzeugt wird, indem es von Anspruch 4 abhängt, wobei die Überprüfung der Ähnlichkeit die Anwendung des Fingerabdruckverfahrens auf das erste digitale Asset umfasst, das den ersten Fingerabdruck liefert, wobei die ersten Daten auf dem gelieferten ersten Fingerabdruck basieren.

13. Computerprogrammprodukt, umfassend Programmcodeanweisungen, die, wenn das Programm von einem Computer ausgeführt wird, den Computer veranlassen, die Schritte des Verfahrens nach einem der Ansprüche 1-12 auszuführen.

14. Elektronische Vorrichtung (100d1) zum Erzeugen eines einem digitalen Asset zugeordneten nicht-fungiblen Tokens, im Folgenden NFT genannt,
wobei die elektronische Vorrichtung einen Prozessor (202) oder eine dedizierte Rechenmaschine umfasst, die konfiguriert ist zum:
- Einleiten (S410) einer anfänglichen NFT, umfassend Informationen zur Identifizierung des digitalen Assets;
- Erhalten (S420) von Informationen, die Transformationsinformationen genannt werden, die für mindestens ein Transformationsverfahren repräsentativ sind, das ein transformiertes digitales Asset liefert, wenn es auf das digitale Asset angewendet wird, wobei das Transformationsverfahren die in dem digitalen Asset vorhandene Informationsmenge reduziert, damit das transformierte digitale Asset mindestens eine technische Eigenschaft des digitalen Assets aufweist;
- Aktualisieren (S440) der Informationen der ursprünglichen NFT, die die dem digitalen Asset zugeordnete NFT liefert, wobei die aktualisierten Informationen die Transformationsinformationen umfassen.

15. Elektronische Vorrichtung (100d2) zur Überprüfung einer Ähnlichkeit zwischen digitalen Assets,
wobei die elektronische Vorrichtung einen Prozessor (302) oder eine dedizierte Rechenmaschine umfasst, die konfiguriert ist zum:
- Erhalten (S510) eines ersten nicht-fungiblen Tokens, im Folgenden NFT, der einem ersten digitalen Asset zugeordnet ist und durch Ausführung des Verfahrens zur Erzeugung eines NFT nach einem der Ansprüche 1 bis 5 erzeugt wurde;
- Erhalten (S520) eines zweiten NFT, die einem zweiten digitalen Asset zugeordnet ist;
- Überprüfen (S530) der Ähnlichkeit des ersten digitalen Assets mit dem zweiten digitalen Asset basierend auf mindestens einem Vergleich zwischen einerseits ersten Daten basierend auf einer Ausgabe eines auf das erste digitale Asset angewendeten Transformationsverfahrens und andererseits zweiten Daten basierend auf einer Ausgabe des auf das zweite digitale Asset angewendeten Transformationsverfahrens, wobei das Transformationsverfahren durch die Transformationsinformationen des ersten NFT identifiziert wird.

## Revendications

1. Procédé (M400) de génération d'un jeton non fongible, ci-après NFT, associé à un actif numérique,
dans lequel un dispositif électronique (100d1) exécute :
- l'obtention (S410) d'un NFT initial comprenant des informations identifiant l'actif numérique ;
- l'obtention (S420) d'informations, appelées informations de transformation, représentatives d'au moins un procédé de transformation délivrant un actif numérique transformé lorsqu'il est appliqué à l'actif numérique, le procédé de transformation réduisant la quantité d'informations présentes dans l'actif numérique pour avoir l'actif numérique transformé représentatif d'au moins une caractéristique technique de l'actif numérique ; et
- la mise à jour (S440) des informations du NFT initial délivrant ledit NFT associé à l'actif numérique, les informations mises à jour comprenant les informations de transformation.

2. Procédé de génération selon la revendication 1, dans lequel lesdites informations mises à jour comprennent l'actif numérique transformé.

3. Procédé de génération selon la revendication 1 ou 2, dans lequel le dispositif électronique exécute :
- l'obtention (S430) d'informations, appelées informations d'empreinte numérique, représentatives d'au moins un procédé d'empreinte numérique délivrant une empreinte numérique lorsqu'il est appliqué à l'actif numérique transformé,
lesdites informations mises à jour comprenant les informations d'empreinte numérique.

4. Procédé de génération selon la revendication 3, dans lequel lesdites informations mises à jour comprennent l'empreinte numérique.

5. Procédé de génération selon l'une quelconque des revendications 1 à 4, dans lequel l'obtention d'un NFT initial comprend :
- la génération du NFT initial ; ou
- la récupération du NFT initial à partir d'une chaîne de blocs.

6. Procédé de vérification d'une similarité entre des actifs numériques,
dans lequel un dispositif électronique (100d2) exécute :
- l'obtention (S510) d'un premier jeton non fongible, ci-après NFT, associé à un premier actif numérique et généré par l'exécution du procédé de génération d'un NFT selon l'une quelconque des revendications 1 à 5 ;
- l'obtention (S520) d'un deuxième NFT associé à un deuxième actif numérique ; et
- la vérification (S530) de la similarité du premier actif numérique avec le deuxième actif numérique sur la base d'au moins une comparaison entre, d'une part, des premières données basées sur une sortie d'un procédé de transformation appliqué au premier actif numérique, et, d'autre part, des deuxièmes données basées sur une sortie du procédé de transformation appliqué au deuxième actif numérique, le procédé de transformation étant identifié par les informations de transformation du premier NFT.

7. Procédé de vérification selon la revendication 6, dans lequel l'obtention du deuxième NFT comprend :
- la génération du deuxième NFT par l'exécution du procédé de génération d'un NFT selon l'une quelconque des revendications 1 à 5 ; ou
- la récupération, à partir d'une chaîne de blocs, du deuxième NFT généré par l'exécution du procédé de génération d'un NFT selon l'une quelconque des revendications 1 à 5.

8. Procédé de vérification selon la revendication 6 ou 7, le premier NFT étant généré par l'exécution du procédé de génération d'un NFT selon la revendication 2 ou selon l'une quelconque des revendications 3 à 5 en ce qu'elle dépend de la revendication 2, dans lequel la vérification de la similarité comprend la lecture du premier actif numérique transformé à partir des informations dans le premier NFT, les premières données étant basées sur le premier actif numérique transformé lu.

9. Procédé de vérification selon la revendication 6 ou 7, le premier NFT étant généré par l'exécution du procédé de génération d'un NFT selon la revendication 2 ou selon l'une quelconque des revendications 3 à 5 en ce qu'elle dépend de la revendication 2, dans lequel la vérification de la similarité comprend l'application du procédé de transformation au premier actif numérique délivrant un premier actif numérique transformé, les premières données étant basées sur le premier actif numérique transformé délivré.

10. Procédé de vérification selon l'une quelconque des revendications 6 à 9, le premier NFT étant généré par l'exécution du procédé de génération d'un NFT selon la revendication 3 ou selon l'une quelconque des revendications 4 ou 5 en ce qu'elle dépend de la revendication 3, dans lequel les premières données sont basées sur une première empreinte numérique délivrée par un procédé d'empreinte numérique appliqué à la sortie du procédé de transformation appliqué au premier actif numérique,
dans lequel les deuxièmes données sont basées sur une deuxième empreinte numérique délivrée par le procédé d'empreinte numérique appliqué à la sortie du procédé de transformation appliqué au deuxième actif numérique,
le procédé d'empreinte numérique étant identifié par les informations d'empreinte numérique du premier NFT.

11. Procédé de vérification selon la revendication 10, le premier NFT étant généré par l'exécution du procédé de génération d'un NFT selon la revendication 4 ou selon la revendication 5 en ce qu'elle dépend de la revendication 4, dans lequel la vérification de la similarité comprend la lecture de la première empreinte numérique à partir des informations dans la première NFT, les premières données étant basées sur la première empreinte numérique lue.

12. Procédé de vérification selon la revendication 6 ou 7, le premier NFT étant généré par l'exécution du procédé de génération d'un NFT selon la revendication 4 ou selon la revendication 5 en ce qu'elle dépend de la revendication 4, dans lequel la vérification de la similarité comprend l'application du procédé d'empreinte numérique au premier actif numérique délivrant la première empreinte numérique, les premières données étant basées sur la première empreinte numérique délivrée.

13. Produit de programme informatique comprenant des instructions de code de programme qui, lorsque le programme est exécuté par un ordinateur, amènent l'ordinateur à réaliser les étapes du procédé selon l'une quelconque des revendications 1 à 12.

14. Dispositif électronique (100d1) de génération d'un jeton non fongible, ci-après NFT, associé à un actif numérique,
dans lequel ledit dispositif électronique comprend un processeur (202) ou une machine de calcul dédiée configurés pour :
- obtenir (S410) un NFT initial comprenant des informations identifiant l'actif numérique ;
- obtenir (S420) des informations, appelées informations de transformation, représentatives d'au moins un procédé de transformation délivrant un actif numérique transformé lorsqu'il est appliqué à l'actif numérique, le procédé de transformation réduisant la quantité d'informations présentes dans l'actif numérique pour avoir l'actif numérique transformé représentatif d'au moins une caractéristique technique de l'actif numérique ;
- mettre à jour (S440) les informations du NFT initial délivrant ledit NFT associé à l'actif numérique, les informations mises à jour comprenant les informations de transformation.

15. Dispositif électronique (100d2) de vérification d'une similarité entre des actifs numériques,
dans lequel ledit dispositif électronique comprend un processeur (302) ou une machine de calcul dédiée configurés pour :
- obtenir (S510) un premier jeton non fongible, ci-après NFT, associé à un premier actif numérique et généré par l'exécution du procédé de génération d'un NFT selon l'une quelconque des revendications 1 à 5 ;
- obtenir (S520) un deuxième NFT associé à un deuxième actif numérique ;
- vérifier (S530) la similarité du premier actif numérique avec le deuxième actif numérique sur la base d'au moins une comparaison entre, d'une part, des premières données basées sur une sortie d'un procédé de transformation appliqué au premier actif numérique, et, d'autre part, des deuxièmes données basées sur une sortie du procédé de transformation appliqué au deuxième actif numérique, le procédé de transformation étant identifié par les informations de transformation du premier NFT.
